# EUROPÄISCHE PATENTSCHRIFT

(11) **EP 4 299 919 B1**
(45) Veröffentlichungstag und Bekanntmachung des Hinweises auf die Patenterteilung: **23.09.2026**
(21) Anmeldenummer: 23180514.4
(22) Anmeldetag: 21.06.2023
(51) Int. Cl.: F15B 11/036, F15B 21/08, F15B 7/00, F15B 11/02, F15B 9/03, G05B 19/042, F15B 19/00, G05B 13/04

(54) **VERFAHREN ZUR REGELUNG VON HYDRAULISCHEN KOMPONENTEN**
METHOD FOR CONTROLLING HYDRAULIC COMPONENTS
PROCÉDÉ DE RÉGULATION DE COMPOSANTS HYDRAULIQUES

(30) Priorität: 28.06.2022 DE 102022206535
(43) Veröffentlichungstag der Anmeldung: 03.01.2024
(73) Patentinhaber: Robert Bosch GmbH, 70442 Stuttgart (DE)
(72) Erfinder: Beck, Sebastian, 97833 Frammersbach (DE); Sendelbach, Thomas, 97816 Lohr (DE); Engber, Arnold, 63768 Hoesbach (DE)

(56) Entgegenhaltungen:
- DE-A1- 102020 207 864
- DE-A1- 102020 213 293

## Beschreibung

Die vorliegende Erfindung betrifft ein Verfahren zur Positionsregelung einer hydraulischen Komponente sowie ein Computerprogram und eine Recheneinheit zu dessen Ausführung.

### Hintergrund der Erfindung

In vielen Bereichen der Technik kommen elektrohydraulische Aktoren zum Einsatz, z.B. zum Heben, Pressen oder Positionieren von Elementen, für Biege- oder Stanzvorgänge und viele mehr. Solche elektrohydraulischen Aktoren können beispielsweise einen Hydraulikzylinder mit einer gesteuerten Motor-Pumpen-Kombination umfassen, z.B. einen Servomotor mit einer Axialkolben-Verstellpumpe.

Der Hydraulikzylinder wird üblicherweise über einen Positionsregelkreis für die Position der Kolbenstange im Zylinder geregelt. Da pumpengesteuerte Achsen aufgrund niedriger Drosselverluste grundsätzlich eine sehr niedrige Dämpfung aufweisen, ist dabei oft eine aktive Dämpfung vorgesehen. Bei Zylindern in Tandembauweise ist dieses Problem verstärkt vorhanden, da hier verhältnismäßig große hydraulische Kapazitäten und Lastmassen vorhanden sind.

Bisher wird diese aktive Dämpfung üblicherweise durch einen Positionsregelkreis mit Beschleunigungsrückführung erreicht. Beispielsweise kann das Beschleunigungssignal im Regelkreis durch einen Beobachter rekonstruiert werden. Problematisch ist dabei aber, dass die Zieldämpfung des Systems durch Signalgüte und Totzeit des Beobachters erheblich limitiert ist.

Die DE 10 2020 207 864 A1 offenbart ein Verfahren zum Betreiben eines hydraulischen Antriebs, der eine von einem drehzahlvariablen elektrischen Motor angetriebene hydraulische Pumpe und einen mit der hydraulischen Pumpe verbundenen hydraulischen Verbraucher mit einem positionierbaren Element umfasst. Basierend auf einem Modell des hydraulischen Antriebs und einer Drehzahl der hydraulischen Pumpe wird ein Positions- und/oder Geschwindigkeitsschätzwert für eine Position bzw. Geschwindigkeit des positionierbaren Elements des hydraulischen Verbrauchers ermittelt, mit bzw. basierend auf dem der hydraulische Antrieb dann betrieben wird, und zwar insbesondere, indem der Positions- und/oder Geschwindigkeitsschätzwert als Istwert für eine Regelung des positionierbaren Elements des hydraulischen Verbrauchers verwendet wird.

Die DE 10 2022 206 535 A1 offenbart ein Verfahren zum Betreiben eines hydraulischen Antriebs, der einen hydraulischen Verbraucher mit einem positionierbaren Kolben in einem Zylinder umfasst. Der Zylinder ist an einem Anschluss mit einem Druckmittelspeicher und an einem anderen Anschluss über ein Proportionalventil mit einer Druckmittelsenke verbunden. Die Position des Kolbens wird unter Verwendung bzw. im Rahmen einer modellbasierten Regelung geregelt, in der eine Stellung des Proportionalventils vorgegeben wird.

### Offenbarung der Erfindung

Erfindungsgemäß wird ein Verfahren zur Positionsregelung einer Zylinderposition für einen pumpengesteuerten Hydraulikzylinder mit den Merkmalen der unabhängigen Patentansprüche vorgeschlagen. Vorteilhafte Ausgestaltungen sind Gegenstand der Unteransprüche sowie der nachfolgenden Beschreibung.

Mit der Erfindung kann die aktive Dämpfung bei der Regelung elektrohydraulischer Aktoren verbessert werden. Dabei wird insbesondere ein Verfahren vorgeschlagen, bei dem zunächst eine Sollposition in eine kaskadierte Reglerstruktur eingegeben wird, wobei die Reglerstruktur einen Positionsregelkreis umfasst und wobei die Regelstrecke des Positionsregelkreises einen Drehzahlregelkreis umfasst, in welchen eine Solldrehzahl als Stellgröße eines Positionsreglers des Positionsregelkreises eingegeben wird. Die Regelstrecke des Positionsregelkreises umfasst weiter modellbasierte Regelglieder, welche eine Druckdynamik und eine Bewegungsgleichung des Hydraulikzylinders wiedergeben. Außerdem wird ein Vorsteuerwert für die Solldrehzahl gebildet, wobei der Vorsteuerwert das Ergebnis einer zeitlichen Differentialgleichung der Sollposition ist. Dieser Vorsteuerwert wird dann zu der Solldrehzahl addiert, welche in die Regelstrecke des Positionsregelkreises, d.h. in den Drehzahlregelkreis eingegeben wird.

Während eine klassische Beschleunigungsrückführung häufig parasitäre Dynamiken und Rauschen in den Regelkreis einkoppelt, werden solche Effekte durch die vorliegende Erfindung vermindert oder verhindert. Insgesamt kann diese flachheitsbasierte Vorsteuerung die Schwingneigung eines solchen Pumpensystems kompensieren. Damit sind hochdynamische Bewegungsprofile des Hydraulikzylinders, z.B. eines hydraulischen Aktors möglich, ohne dabei Schwingungen anzuregen oder Stabilitätsprobleme zu verursachen. Die Vorsteuerung reduziert den Schleppfehler der Regelung nahezu vollständig.

Dabei kann die zeitliche Differentialgleichung der Sollposition insbesondere ein inverses Streckenmodell der Regelstrecke des Positionsregelkreises umfassen.

Erfindungsgemäß kann der Vorsteuerwert bestimmt werden durch die folgende Gleichung: ${n}_{cmd , ff} = \frac{{C}_{H}}{{A}_{Z} {V}_{G}} ⋅ \left({{x}^{⃛}}_{d}⋅m+{d}_{Z}⋅{{x}^{¨}}_{d}\right) + \frac{{A}_{Z}}{{V}_{G}} ⋅ {\dot{x}}_{d}$

Die Parameter dieser Gleichung können dabei auch über die Vorschubkonstante, die Eigenkreisfrequenz und die Dämpfung des Systems bestimmt werden, wobei diese Parameter definiert sind als: ${K}_{Str} = \frac{{V}_{G}}{{A}_{Z}}$ ${ω}_{h} = \sqrt{\frac{1}{{C}_{H}} \frac{{A}_{Z}^{2}}{m}}$ und ${D}_{h} = \frac{{d}_{Z}}{2 ⋅ {ω}_{h} ⋅ m}$

Der Vorsteuerwert ergibt sich dann zu ${n}_{cmd , ff} = \frac{1}{{K}_{Str}} \left(\frac{1}{{{ω}_{h}}^{2}}{{x}^{¨}}_{d}+\frac{2 {D}_{h}}{{ω}_{h}}{{x}^{¨}}_{d}+{\dot{x}}_{d}\right)$

Dabei bezeichnen *A_{z}* die Zylinderfläche, *V_{G}* das Schluckvolumen der Pumpe, *d_{z}* die viskose Reibung, *m* die bewegte Masse, *x_{d}* die Sollposition des Zylinders, *C_{H}* die hydraulische Kapazität.

Es ist außerdem möglich, zusätzlich den Soll-Positionswert zunächst in einen Sollwertfilter einzugeben, welcher dazu eingerichtet ist, eine Solltrajektorie für den Soll-Positionswert und die zeitlichen Ableitungen des Soll-Positionswerts auszugeben, und diese Solltrajektorie in die Differentialgleichung zum Bilden des Vorsteuerwerts einzugeben.

Als Sollwertfilter kann beispielsweise ein Zustandsvariablenfilter vierter Ordnung verwendet werden.

Ein Hydraulikzylinder, der mit diesem Verfahren geregelt wird, kann insbesondere ein Tandemzylinder oder ein Gleichgangzylinder sein. Bei einem Tandemzylinder sind typischerweise große hydraulische Kapazitäten und Lastmassen vorhanden, so dass eine aktive Dämpfung erforderlich ist. Durch die hier vorgeschlagene Vorsteuerung wird die aktive Dämpfung des Systems gegenüber dem Stand der Technik wesentlich verbessert.

Insgesamt wird also durch eine flachheitsbasierte, insbesondere modellbasierte Vorsteuerung das Führungsverhalten, die Stabilitätsreserve und die Regelruhe des Systems verbessert. Sie ermöglicht außerdem die Realisierung hochdynamischer Bewegungsprofile trotz niedriger Systemdämpfung. Der Antriebsregler kann auf Störfestigkeit ausgelegt werden, da das Folgeverhalten durch die Vorsteuerung deutlich verbessert wird.

Eine erfindungsgemäße Recheneinheit, z.B. ein Steuergerät eines hydraulischen Aktors, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.
Figurenbeschreibung
Figur 1a zeigt schematisch einen pumpengesteuerten Zylinderantrieb in Tandembauweise;
Figur 1b zeigt schematisch einen pumpengesteuerten Zylinderantrieb mit Gleichgangzylinder;
Figur 2 zeigt einen erweiterten Positionsregelkreis gemäß einer möglichen Ausführungsform;
Figur 3a zeigt Vergleichsmessungen der Zylinderposition zwischen einem händisch eingestellten Regler und einer erfindungsgemäßen Regelung mit Vorsteuerung; und
Figur 3b zeigt Vergleichsmessungen der Kolbengeschwindigkeit zwischen einem händisch eingestellten Regler und einer erfindungsgemäßen Regelung mit Vorsteuerung.

### Detaillierte Beschreibung

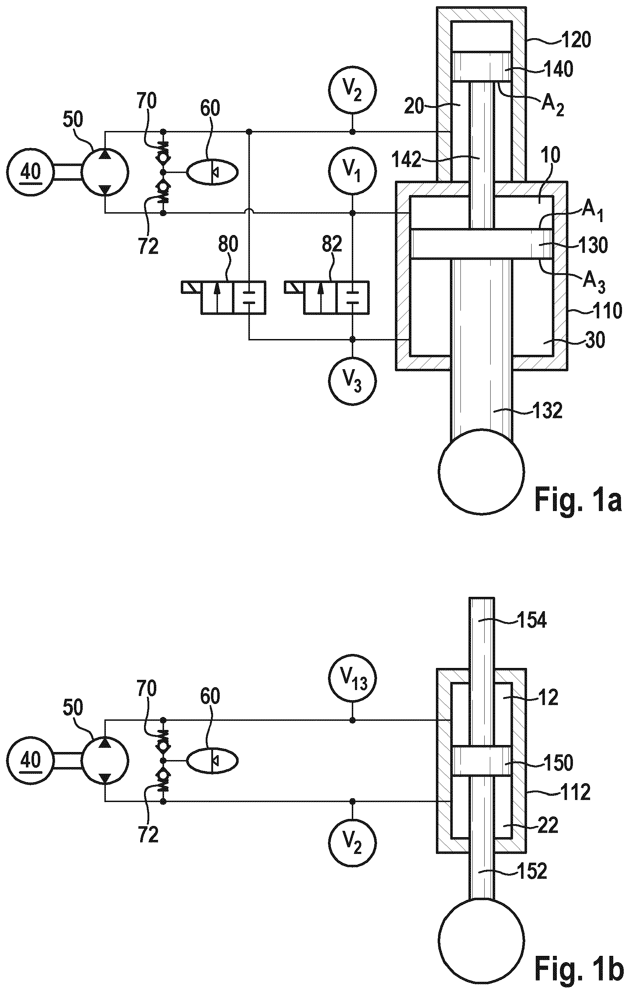

Die nachfolgenden Ausführungsformen sind für alle Positionsregelkreise für Hydraulikzylinder geeignet, insbesondere für die Regelung pumpengesteuerter elektrohydraulischer Zylinderantriebe. Dabei kann ein solcher Zylinderantrieb beispielsweise einen Tandemzylinder mit Flächenumschaltung oder einen Gleichgangzylinder umfassen. Diese beiden Systeme sind in den Figuren 1a und 1b schematisch dargestellt. Die grundsätzliche Funktionsweise solcher Zylinderantriebe ist im Fach bekannt und wird hier daher nur kurz beschrieben.

Figur 1a zeigt schematisch einen pumpengesteuerten Tandemzylinder mit Flächenumschaltung. Dabei wird eine Hydraulikpumpe 50 durch einen Motor 40 angesteuert. Der Tandemzylinder umfasst zwei hintereinander geschaltete Hydraulikzylinder 110, 120, wobei eine einzelne Kolbenstange durch beide Zylinder führt oder die Kolbenstange 132 des ersten Zylinders 110 zumindest fest mit der Kolbenstange 142 des zweiten Zylinders 120 verkoppelt ist. Die Hydraulikpumpe 50 bedient beide Zylinder gleichzeitig. Die beiden Zylinder umfassen damit drei Ringkammern. Eine erste Zylinderkammer 10 wird durch das Volumen im ersten Zylinder 110 zwischen der ersten, oberen Kolbenfläche 130 mit einer wirksamen Kolbenfläche A₁ und dem zweiten Zylinder 120 gebildet; eine zweite Zylinderkammer 20 wird durch den zweiten Kolben 140 bzw. dessen Fläche A₂ im zweiten Zylinder 120 gebildet; und eine dritte Zylinderkammer 30 wird durch die untere Fläche A₃ des ersten Kolbens 130 und den unteren Teil des ersten Zylinders 110 gebildet. Dabei sind mit Vᵢ zusätzlich die verschiedenen Totvolumina der jeweiligen Zylinderkammern angegeben. Das System umfasst weiter auf übliche Weise einen Hydraulikspeicher 60 bzw. Druckspeicher mit Ventilen 70, 72, 80, 82, die zum Teil ansteuerbare Ventile 80, 82 umfassen können, um die Fluidschaltung für die verschiedenen Zylinderkammern zu bewirken. Beim Ausfahren im Eilgang wird die Pumpe 50 und die Ventile 80, 82 so angesteuert, dass das Teilvolumen aus der zweiten Zylinderkammer 20 über die Pumpe 50 in die erste Zylinderkammer 10 fließt. Gleichzeitig fließt auch das Teilvolumen aus der dritten Zylinderkammer 30 über das Ventil 82 in die erste Zylinderkammer 10. Beim Ausfahren im Schleichgang fördert die Pumpe in dieselbe Richtung, die Ventile werden aber so angesteuert, dass das Teilvolumen aus den zweiten und dritten Zylinderkammern 20 und 30 in die erste Zylinderkammer 10 fließt. Beim Einfahren im Eilgang schließlich wird die Pumprichtung umgekehrt, und das Volumen aus der Zylinderkammer 10 fließt in die zweite 20 und die dritte 30 Zylinderkammer.

Figur 1b zeigt schematisch einen pumpengesteuerten Gleichgangzylinder. Dabei handelt es sich um einen doppeltwirkenden Zylinder 112 mit zwei Kolbenstangen 152, 154 bzw. einer durchgehenden Kolbenstange, die auf beiden Seiten gleich dick ist, so dass derselbe Volumenstrom auf beide Kolbenflächen des Kolbens 150 wirkt und Einfahr- und Ausfahrgeschwindigkeit gleich groß sind. Die Hydraulikpumpe 50 wird ebenfalls von einem Motor oder einem ähnlichen Antrieb angetrieben und bedient in Verbindung mit einem Druckspeicher 60 und Ventilen 70, 72 die beiden Zylinderkammern 12 und 22, die zwischen den Zylinderwänden und den Kolbenflächen entstehen, gleichzeitig. Die Pumprichtung bestimmt die Bewegungsrichtung des Kolbens.

Unter Vernachlässigung von Drosselverlusten an den Schaltventilen können diese beiden Antriebe auf mathematisch identische Systeme überführt werden, so dass die nachfolgenden Regelverfahren für beide Varianten angewendet werden können.

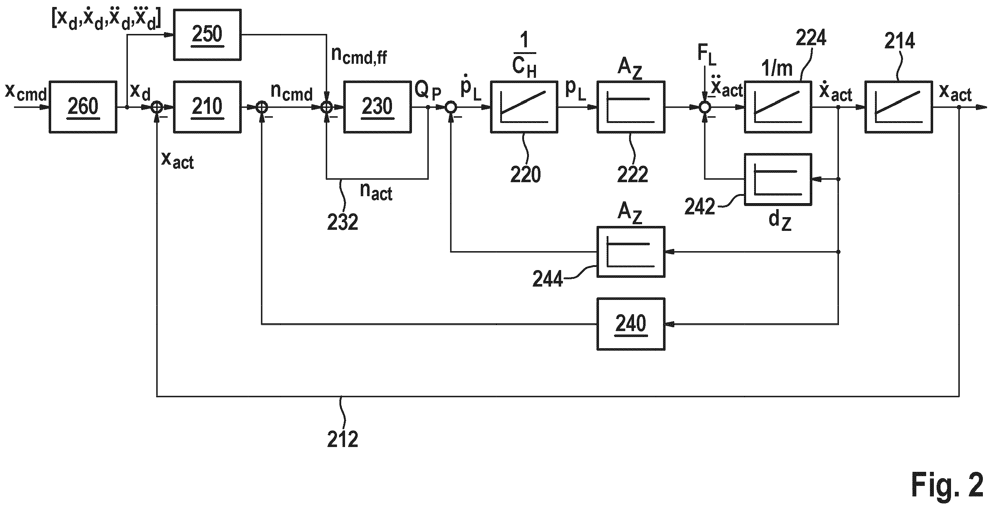

Figur 2 zeigt beispielhaft einen Positionsregelkreis gemäß einer möglichen Ausführungsform für einen pumpengesteuerten elektrohydraulischen Zylinderantrieb. Dabei wird ein herkömmlicher Positionsregelkreis mit einer Beschleunigungsrückführung erfindungsgemäß um eine Vorsteuerung 250 erweitert. Außerdem kann ein Sollwertfilter für den Positionswert eingesetzt werden.

Die gezeigte Regelung umfasst eine kaskadierte Reglerstruktur mit mehreren ineinander geschachtelten Regelkreisen.

Ein Soll-Positionswert *x_{cmd}* wird als Führungsgröße für die Gesamtregelung verwendet. Mittels eines Sollwertfilters 260 werden daraus Soll-Positionswerte *x_{d}* und ihre Ableitungen für die Vorsteuerung gewonnen werden. Ein Positionsregler 210 eines Positionsregelkreises gibt als Stellgröße eine Soll-Drehzahl *n_{cmd}* aus und erhält den Ist-Positionswert *x_{act}* durch die Rückführung 212 zur Bestimmung der Regeldifferenz. Die Regelstrecke des Positionsregelkreises umfasst einen Drehzahlregelkreis 230 mit einer Rückführung 232 für die Pumpendrehzahl *n* sowie verschiedene modellbasierte Regelglieder. Dabei ist der Drehzahlregelkreis 230 hier nur vereinfacht dargestellt und kann selbst wiederum weitere, hier nicht gezeigte Regler umfassen, z.B. eine Antriebsregelung für den Pumpenantrieb, welcher für die Einstellung der vorgegebenen Drehzahl sorgt.

Der Positionsregler gibt also die Soll-Drehzahl *n_{cmd}* aus, die dann als Stellgröße der Positionsregelstrecke und dabei gleichzeitig als Führungsgröße für den Drehzahlregelkreis 230 verwendet wird. Der Drehzahlregelkreis gibt eine geregelte Pumpendrehzahl n aus, aus der sich mit dem Schluckvolumen der Pumpe der Volumenstrom *Qₚ* der Pumpe und damit die Lastdruckveränderung *ṗ_{L}* bestimmen lässt. Die Lastdruckveränderung wird in einem PI-Glied 220 mit der hydraulischen Kapazität *C_{H}* in den Lastdruck *p_{L}* überführt, was wiederum unter Berücksichtigung der Zylinderfläche *A_{z}* durch ein weiteres Regelglied 222 die Kraft ergibt. Aus der Kraft kann über die Masse m die Beschleunigung *ẍ_{act}* des Kolbens in einem PI-Glied 224 in die Kolbengeschwindigkeit *ẋ_{act}* überführt werden und schließlich durch ein I-Glied 214 in die Kolbenposition *x_{act}.*

Dabei wird die in das Regelglied 224 eingehende Kraft durch die Lastkraft *F_{L}* sowie durch die Reibungsverluste 242 gestört; außerdem wirkt der von der Pumpe aufgebrachten Druckdynamik der Zylinderdruck 244 entgegen.

Schließlich wird die Soll-Drehzahl *n_{cmd}* durch eine aktive Dämpfung 240, die zum Beispiel durch eine Beschleunigungsrückführung erreicht werden kann, angepasst.

Das Streckenmodell für die in Figur 2 dargestellte Regelstrecke kann also zusammengefasst wie folgt gebildet werden:
Für die Druckdynamik, d.h. die zeitliche Ableitung des Drucks, gilt ${\dot{p}}_{L} = \frac{1}{{C}_{H}} \left({n}_{P}⋅{V}_{G}-{A}_{Z}⋅{\dot{x}}_{d}\right)$ wobei *p_{L}* der Lastdruck des Zylinders, *C_{H}* die hydraulische Kapazität, *nₚ* die Drehzahl der Pumpe, *V_{G}* das Schluckvolumen der Pumpe, *A_{z}* die Zylinderfläche und *x_{d}* die Sollposition des Zylinders ist.

Die Bewegungsgleichung für den Zylinder lautet ${{x}^{¨}}_{d} = \frac{1}{m} \left({p}_{L}⋅{A}_{Z}-{d}_{Z}⋅{\dot{x}}_{d}\right)$ wobei *m* die bewegte Masse ist, *ẍ_{d}* die zweite Ableitung der Sollposition und damit die Beschleunigung der Kolbenstange ist, *p_{L}* der Lastdruck des Zylinders ist, *ẋ_{d}* die Geschwindigkeit der Kolbenstange (erste Ableitung der Sollposition) ist, *d_{z}* die viskose Reibung und *A_{z}* die Zylinderfläche ist.

Für einen Tandemzylinder wie etwa in Figur 1a ergibt sich der Term für das Inverse der hydraulischen Kapazität zu $\frac{1}{{C}_{H , Tandem}} = {E}_{Ö l}^{′} \left(\frac{1}{{V}_{1} + {A}_{1} x + {A}_{3} \left(h-{x}_{d}\right)}+\frac{1}{{V}_{2} + {A}_{2} \left(h-{x}_{d}\right)}\right)$ wobei *E'_{Öl}* das Ersatzkompressionsmodul ist, wobei *V₁* das Totvolumen der ersten Zylinderkammer ist, wobei *V₂* das Totvolumen der zweiten Zylinderkammer ist, wobei *A₁* die obere Zylinderfläche des ersten Kolbens ist, wobei *A₃* die untere Zylinderfläche des ersten Kolbens ist, und wobei *A₂* die Zylinderfläche des zweiten Kolbens ist.

Entsprechend ergibt sich das Inverse der hydraulischen Kapazität für einen Gleichgangzylinder wie in Figur 1b zu $\frac{1}{{C}_{H , Gleichgang}} = {E}_{Ö l}^{′} \left(\frac{1}{{V}_{13} + {A}_{Z} {x}_{d}}+\frac{1}{{V}_{2} + {A}_{Z} \left(h-{x}_{d}\right)}\right)$ wobei *V₁₃* das Totvolumen der ersten Zylinderkammer ist.

Damit entspricht das Eilgangmodell des Tandemzylinders mit Flächenumschaltung einem Gleichgangzylinder. Lediglich die hydraulische Kapazität unterscheidet sich in der Struktur des mathematischen Modells. Die folgenden Ausführungen und die hier generell beschriebenen Ausführungsformen für die Vorsteuerung lassen sich somit auf beide Bauformen anwenden. Ebenso lassen sich diese grundsätzlich auf alle Varianten anwenden, die mit einem äquivalenten mathematischen Modell beschreibbar sind.

Aus diesem Modell kann ein Vorsteuergesetz abgeleitet werden. Dazu kann das Streckenmodell invertiert werden.

Eine Ableitung der Bewegungsgleichung (2) für den Zylinder nach der Zeit ergibt den Ruck *x*⁽³⁾_{d} ${{x}^{⃛}}_{d} = \frac{1}{m} \left({\dot{p}}_{L}⋅{A}_{Z}-{d}_{Z}⋅{{x}^{¨}}_{d}\right)$ wobei wieder *m* die bewegte Masse ist, *ẍ_{d}* die zweite Ableitung der Sollposition und damit die Beschleunigung der Kolbenstange ist, *p_{L}* der Lastdruck des Zylinders ist, *d_{z}* die viskose Reibung und *A_{z}* die Zylinderfläche ist.

Durch Einsetzen der Druckdynamik aus Gleichung (1) erhält man damit die Ruck-Differentialgleichung ${{x}^{⃛}}_{d} = \frac{1}{m} \left(\frac{{A}_{Z}}{{C}_{H}}\left({n}_{P}⋅{V}_{G}-{A}_{Z}⋅{\dot{x}}_{d}\right)-{d}_{Z}⋅{{x}^{¨}}_{d}\right)$ wobei *C_{H}* die hydraulische Kapazität, *nₚ* die Drehzahl der Pumpe, *V_{G}* das Schluckvolumen der Pumpe, *d_{z}* die viskose Reibung, *A_{z}* die Zylinderfläche und *x_{d}* die Sollposition des Zylinders ist.

Diese resultierende Ruck-Differentialgleichung (6) kann dann nach der Pumpendrehzahl *nₚ* umgestellt werden. Dabei können Solltrajektorien [*x_{d}, ẋ_{d}, ẍ_{d}, x⁽³⁾_{d}*] für die Zylinderposition eingesetzt werden.

Damit erhält man einen Vorsteuer-Drehzahlwert *n_{cmd,ff}* für eine flachheitsbasierte Vorsteuerung 250 als ${n}_{cmd , ff} = \frac{{C}_{H}}{{A}_{Z} {V}_{G}} ⋅ \left({{x}^{⃛}}_{d}⋅m+{d}_{Z}⋅{{x}^{¨}}_{d}\right) + \frac{{A}_{Z}}{{V}_{G}} ⋅ {\dot{x}}_{d}$ was dem inversen Antriebsmodell des Streckenmodells aus Figur 2 entspricht.

Dieser resultierende Vorsteuerwert *n_{cmd,ff}* kann dann additiv auf den Eingang des Drehzahlreglers 230 bzw. der Regelstrecke des Positionsregelkreises eingegeben werden.

In einer alternativen Ausführungsform kann die Vorsteuerung 250 anstelle der Verwendung des inversen Modells auch über die Eigenfrequenz und Dämpfung des Antriebs parametriert werden. Der Vorsteuerungswert für die Soll-Drehzahl ergibt sich dann zu ${n}_{cmd , ff} = \frac{1}{{K}_{Str}} \left(\frac{1}{{{ω}_{h}}^{2}}{{x}^{⃛}}_{d}+\frac{2 {D}_{h}}{{ω}_{h}}{{x}^{¨}}_{d}+{\dot{x}}_{d}\right)$ wobei die Parameter z.B. über eine Systemidentifikation oder physikalisch mit Maschinenparametern bestimmt werden können.

Dabei können insbesondere die folgenden Zusammenhänge für die Vorschubkonstante, die Eigenkreisfrequenz und die Dämpfung des Pumpensystems genutzt werden: ${K}_{Str} = \frac{{V}_{G}}{{A}_{Z}}$ ${ω}_{h} = \sqrt{\frac{1}{{C}_{H}} \frac{{A}_{Z}^{2}}{m}}$ ${D}_{h} = \frac{{d}_{Z}}{2 ⋅ {ω}_{h} ⋅ m}$

Es sind dann verschiedene Ansätze möglich.

Für die Positionsabhängigkeit der Eigenkreisfrequenz ωₕ kann eine vorgegebene Position eingesetzt werden. Beispielsweise kann dazu die Position eines kritischen Betriebspunkts x_{AP} genutzt werden, die der Zylinderantrieb erreichen soll. Beispielsweise kann als kritischer Betriebspunkt die halbe Zylinderhöhe, x_{AP} = h/2 eingesetzt werden und die Eigenkreisfrequenz als konstant angenommen werden.

Alternativ oder zusätzlich kann die hydraulische Kapazität und damit die Hubabhängigkeit der Eigenkreisfrequenz in jedem Sampleschritt durch Einsetzen der Soll- oder der gefilterten Ist-Position bestimmt werden.

Somit wird auch in diesem alternativen Fall ein Vorsteuergesetz als Differentialgleichung des Positionswerts genutzt.

Die Werte für die Soll-Positionswerte und ihre Ableitungen, die in das Vorsteuergesetz eingehen, können für beide Varianten der Vorsteuerung als Solltrajektorien unter Verwendung eines Sollwertfilters 260 gebildet werden. Dazu kann beispielsweise ein Zustandsvariablenfilter vierter Ordnung der Form ${x}_{d}^{\left(4\right)} = \frac{1}{{τ}^{4}} v - \frac{1}{{τ}^{4}} {{x}^{⃛}}_{d} - \frac{4}{{τ}^{3}} {{x}^{¨}}_{d} - \frac{6}{{τ}^{2}} {\dot{x}}_{d} - \frac{4}{τ} {x}_{d}$ genutzt werden, wobei *τ* die Zeitkonstante des Sollwertfilters ist, und *x⁽⁴⁾_{d}* die vierte Ableitung der Zylinder-Sollposition ist. Der Eingang des Filters v ist in diesem Fall der kommandierte Positionssollwert *x_{cmd}.* Ebenso sind aber auch andere Sollwertfilter denkbar, um die Soll-Positionswerte und ihre Ableitungen für die Vorsteuerung zu gewinnen. Der gefilterte Positionssollwert kann dann wie in Figur 2 gezeigt als Eingangsgröße für die Vorsteuerung 250 dienen.

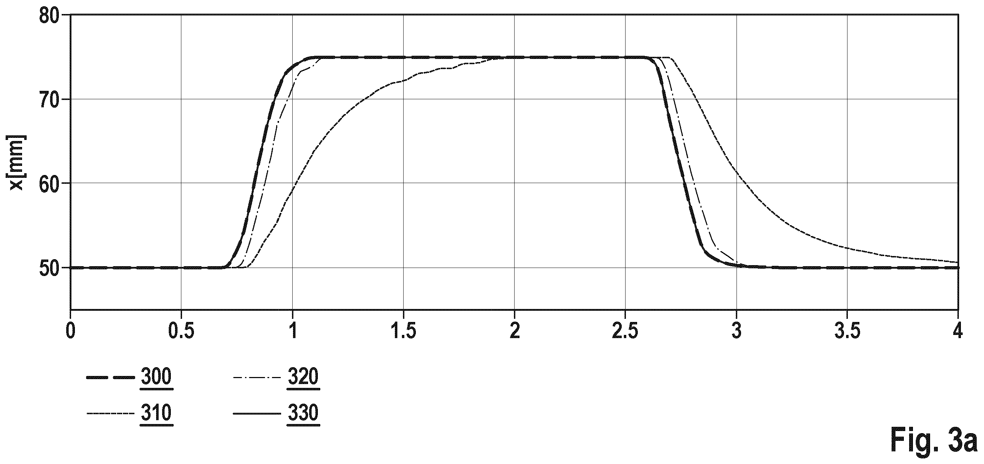

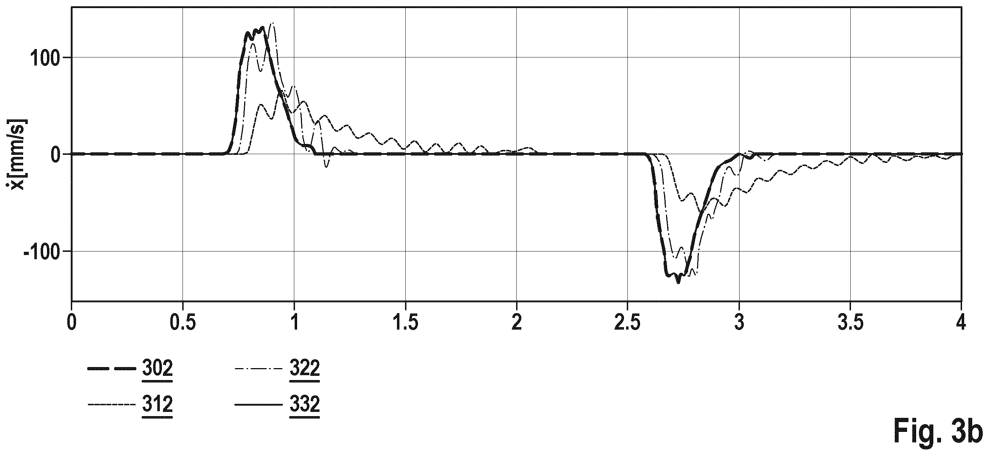

Figur 3 zeigt zur Veranschaulichung ein Ergebnis bei Anwendung einer Ausführungsform des hier vorgeschlagenen Verfahrens. Dabei ist in Figur 3a die Zylinderposition in mm gezeigt, wobei zunächst die Sollposition als Kurvenverlauf 300 eingezeichnet ist und die erhaltenen Werte der Ist-Zylinderposition dargestellt sind. Dabei wurde zunächst die Ist-Position bei einer Regelung mit Werkseinstellungen 310, ohne weitere Anpassung, aufgezeichnet.

Diese Variante zeigt einen großen Schleppfehler. Bei Applikateureinstellung 320, d.h. händisch eingestelltem Regler, wird ein wesentlich besseres Regelverhalten erreicht, das aber durch die Vorsteuerung 330 noch weiter verbessert wird. Der Schleppfehler mit Vorsteuerung ist nahezu null, was beispielsweise für hydraulische Motion-Control-Anwendungen ein wichtiger Vorteil ist.

Figur 3b zeigt die entsprechenden Kurven für die Geschwindigkeit des Kolbens in mm/s. Auch hier zeigt sich, dass die Vorsteuerung 332 ein sehr gutes Regelverhalten liefert und der Sollposition 302 folgt. Dagegen sind ohne zusätzliche Einstellung (Werkseinstellung 312) und beim händisch eingestellten Regler 322 deutliche Abweichungen zu erkennen. Insbesondere zeigt sich, dass dort trotz aktiver Dämpfung durch einen Beobachter das System eine deutliche Schwingneigung hat. Dieses Schwingen wird durch die beschriebene flachheitsbasierte Vorsteuerung effektiv verhindert.

## Patentansprüche

1. Verfahren zur Positionsregelung einer Zylinderposition für einen pumpengesteuerten Hydraulikzylinder, umfassend:
Eingeben einer Sollposition (x_{cmd}) in eine kaskadierte Reglerstruktur, wobei die Reglerstruktur einen Positionsregelkreis (210, 212) umfasst,
wobei die Regelstrecke des Positionsregelkreises einen Drehzahlregelkreis (230, 232) umfasst, in welchen eine Solldrehzahl (n_{cmd}) als Stellgröße eines Positionsreglers (210) des Positionsregelkreises eingegeben wird;
wobei die Regelstrecke des Positionsregelkreises weiter modellbasierte Regelglieder umfasst, welche eine Druckdynamik und eine Bewegungsgleichung des Hydraulikzylinders wiedergeben;
Bilden (250) eines Vorsteuerwerts (n_{cmd,ff}) für die Solldrehzahl als Ergebnis einer zeitlichen Differentialgleichung der Sollposition; und
a) Addieren des Vorsteuerwerts (n_{cmd,ff}) zu der Solldrehzahl (n_{cmd}), welche in die Regelstrecke des Positionsregelkreises eingegeben wird, wobei der Vorsteuerwert *n_{cmd,ff}* bestimmt wird durch: ${m}_{cmd , ff} = \frac{{C}_{H}}{{A}_{Z} {V}_{G}} ⋅ \left({{x}^{⃛}}_{d}⋅m+{d}_{Z}⋅{{x}^{¨}}_{d}\right) + \frac{{A}_{Z}}{{V}_{G}} ⋅ {\dot{x}}_{d} ,$ oder
b) wobei die Parameter der zeitlichen Differentialgleichung durch die Vorschubkonstante ${K}_{Str} = \frac{{V}_{G}}{{A}_{Z}}$, die Eigenkreisfrequenz ${ω}_{h} = \sqrt{\frac{1}{{C}_{H}} \frac{{A}_{Z}^{2}}{m}}$ und die Dämpfung ${ω}_{h} = \sqrt{\frac{1}{{C}_{H}} \frac{{A}_{Z}^{2}}{m}}$ des Systems bestimmt werden, wobei dann der Vorsteuerwert bestimmt wird durch: ${n}_{cmd , ff} = \frac{1}{{K}_{Str}} \left(\frac{1}{{{ω}_{h}}^{2}}{{x}^{⃛}}_{d}+\frac{2 {D}_{h}}{{ω}_{h}}{{x}^{¨}}_{d}+{\dot{x}}_{d}\right) ,$ mit *A_{z}*: Zylinderfläche, *V_{G}*: Schluckvolumen der Pumpe, *d_{z}*: viskose Reibung, *m*: bewegte Masse, *x_{d}*: Sollposition des Zylinders, *C_{H}*: hydraulische Kapazität.

2. Verfahren nach Anspruch 1, wobei die zeitliche Differentialgleichung der Sollposition ein inverses Streckenmodell der Regelstrecke des Positionsregelkreises umfasst.

3. Verfahren nach einem der vorhergehenden Ansprüche, weiter umfassend:
Eingeben des Soll-Positionswerts in einen Sollwertfilter, welcher dazu eingerichtet ist, eine Solltrajektorie für den Soll-Positionswert und die zeitlichen Ableitungen des Soll-Positionswerts auszugeben, und
Eingeben der Solltrajektorie in die Differentialgleichung zum Bilden des Vorsteuerwerts.

4. Verfahren nach Anspruch 3, wobei der Sollwertfilter einen Zustandsvariablenfilter vierter Ordnung umfasst.

5. Verfahren nach einem der vorhergehenden Ansprüche, wobei der Hydraulikzylinder ein Tandemzylinder oder ein Gleichgangzylinder ist.

6. Recheneinheit umfassend einen Prozessor, der so konfiguriert ist, dass er das Verfahren nach einem der vorhergehenden Ansprüche ausführt.

7. Computerprogramm umfassend Befehle, die bei der Ausführung des Programms durch einen Computer diesen veranlassen, das Verfahren nach einem der Ansprüche 1 bis 5 auszuführen.

8. Computerlesbarer Datenträger, auf dem das Computerprogramm nach Anspruch 7 gespeichert ist.

## Claims

1. Method for position control of a cylinder position for a pump-controlled hydraulic cylinder, comprising:
inputting a target position (X_{cmd}) into a cascaded controller structure, wherein the controller structure comprises a position control loop (210, 212),
wherein the controlled system of the position control loop comprises a speed control loop (230, 232), into which a target speed (n_{cmd}) is input as the manipulated variable of a position controller (210) of the position control loop;
wherein the controlled system of the position control loop further comprises model-based control elements, which reproduce pressure dynamics and a motion equation of the hydraulic cylinder;
forming (250) a pilot control value (n_{cmd,ff}) for the target speed as a result of a temporal differential equation of the target position; and
a) adding the pilot control value (n_{cmd,ff}) to the target speed (n_{cmd}) that is input into the controlled system of the position control loop, wherein the pilot control value n_{cmd,ff} is determined by: ${n}_{cmd , ff} = \frac{{C}_{H}}{{A}_{Z} {V}_{G}} ⋅ \left({{x}^{⃛}}_{d}⋅m+{d}_{Z}⋅{{x}^{¨}}_{d}\right) + \frac{{A}_{Z}}{{V}_{G}} ⋅ {\dot{x}}_{d} ,$ or
b) wherein the parameters of the temporal differential equation are determined by the feed constant ${K}_{Str} = \frac{{V}_{G}}{{A}_{Z}}$, the natural angular frequency ${ω}_{h} = \sqrt{\frac{1}{{C}_{H}} \frac{{A}_{Z}^{2}}{m}}$ and the damping ${ω}_{h} = \sqrt{\frac{1}{{C}_{H}} \frac{{A}_{Z}^{2}}{m}}$ of the system, wherein the pilot control value is then determined by: ${n}_{cmd , ff} = \frac{1}{{K}_{Str}} \left(\frac{1}{{{ω}_{h}}^{2}}{{x}^{⃛}}_{d}+\frac{2 {D}_{h}}{{ω}_{h}}{{x}^{¨}}_{d}+{\dot{x}}_{d}\right) ,$ where *A_{z}*: cylinder surface, *V_{G}*: displacement volume of the pump, *d_{z}*: viscous friction, *m*: moving mass, *x_{d}*: target position of the cylinder, *C_{H}:* hydraulic capacity.

2. Method according to Claim 1, wherein the temporal differential equation of the target position comprises an inverse system model of the controlled system of the position control loop.

3. Method according to one of the preceding claims, furthermore comprising:
inputting the target position value into a target value filter which is configured to output a target trajectory for the target position value and the time derivatives of the target position value, and
inputting the target trajectory into the differential equation in order to form the pilot control value.

4. Method according to Claim 3, wherein the target value filter comprises a fourth-order state variable filter.

5. Method according to one of the preceding claims, wherein the hydraulic cylinder is a tandem cylinder or a synchronous cylinder.

6. Computing unit comprising a processor configured to perform the method according to one of the preceding claims.

7. Computer program comprising instructions which, when the program is executed by a computer, cause the computer to execute the method according to any of Claims 1 to 5.

8. Computer-readable data carrier on which the computer program according to Claim 7 is stored.

## Revendications

1. Procédé de régulation de position d'une position de vérin pour un vérin hydraulique commandé par pompe, comprenant :
entrée d'une position théorique (X_{cmd}) dans une structure de régulateur en cascade, la structure de régulateur comprenant un circuit de régulation de pression (210, 212),
le système réglé du circuit de régulation de position comprenant un circuit de régulation de vitesse de rotation (230, 232), dans lequel une vitesse de rotation théorique (n_{cmd}) est entrée en tant que grandeur de réglage d'un régulateur de pression (210) du circuit de régulation de position ;
le système réglé du circuit de régulation de position comprenant par ailleurs des éléments de régulation basés sur des modèles qui reproduisent une dynamique de pression et une équation de mouvement du vérin hydraulique ;
formation (250) d'une valeur de commande pilote (n_{cmd,ff}) pour la vitesse de rotation théorique en tant que résultat d'une équation différentielle dans le temps de la position théorique ; et
a) ajout de la valeur de commande pilote (n_{cmd,ff}) à la vitesse de rotation théorique (n_{cmd}), qui est entrée dans le système réglé du circuit de régulation de position, la valeur de commande pilote n_{cmd,ff} étant déterminée par : ${n}_{cmd , ff} = \frac{{C}_{H}}{{A}_{Z} {V}_{G}} ⋅ \left({{x}^{⃛}}_{d}⋅m+{d}_{Z}⋅{{x}^{¨}}_{d}\right) + \frac{{A}_{Z}}{{V}_{G}} ⋅ {\dot{x}}_{d} ,$ ou
b) les paramètres de l'équation différentielle dans le temps étant déterminés par la constante d'avancement ${K}_{Str} = \frac{{V}_{G}}{{A}_{Z}}$, la fréquence propre de circuit ${ω}_{h} = \sqrt{\frac{1}{{C}_{H}} \frac{{A}_{Z}^{2}}{m}}$ et l'amortissement ${ω}_{h} = \sqrt{\frac{1}{{C}_{H}} \frac{{A}_{Z}^{2}}{m}}$ du système, la valeur de commande pilote étant alors déterminée par : ${n}_{cmd , ff} = \frac{1}{{K}_{Str}} \left(\frac{1}{{ω}_{{h}^{2}}}{{x}^{⃛}}_{d}+\frac{2 {D}_{h}}{{ω}_{h}}{{x}^{¨}}_{d}+{\dot{x}}_{d}\right) ,$ avec *A_{z}* : surface de vérin, *V_{G}* : volume absorbé de la pompe, *d_{z}* : frottement visqueux, *m* : masse mobile, *x_{d}* : position théorique du vérin, *C_{H}* : capacité hydraulique.

2. Procédé selon la revendication 1, l'équation différentielle dans le temps de la position théorique comprenant un modèle de système inverse du système réglé du circuit de régulation de position.

3. Procédé selon l'une des revendications précédentes, comprenant en outre :
entrée de la valeur de position théorique dans un filtre de valeur théorique, qui est mis au point pour délivrer une trajectoire théorique pour la valeur de pression théorique et les dérivées de temps de la valeur de position théorique, et
entrée de la trajectoire théorique dans l'équation différentielle pour former la valeur commande pilote.

4. Procédé selon la revendication 3, le filtre de valeur théorique comprenant un filtre à variable d'état de quatrième ordre.

5. Procédé selon l'une des revendications précédentes, le vérin hydraulique étant un vérin tandem ou un vérin synchrone.

6. Unité de calcul comprenant un processeur, qui est configuré de telle sorte qu'il exécute le procédé selon l'une des revendications précédentes.

7. Programme informatique comprenant des instructions qui, lors de l'exécution du programme par un ordinateur, amènent celui-ci à exécuter le procédé selon l'une des revendications 1 à 5.

8. Support de données lisible par ordinateur, sur lequel est stocké le programme informatique selon la revendication 7.
